# FASCICULE DE BREVET EUROPEEN

(11) **EP 4 425 105 B1**
(45) Date de publication et mention de la délivrance du brevet: **15.04.2026**
(21) Numéro de dépôt: 24152466.9
(22) Date de dépôt: 17.01.2024
(51) Int. Cl.: G01C 23/00

(54) **PROCÉDÉ ET DISPOSITIF DE GESTION DE VOL EN CAS DE CONTEXTE DIFFICILE EN CAS D'INCAPACITÉ D'AU MOINS UN PILOTE AUX COMMANDES**
VERFAHREN UND VORRICHTUNG ZUR FLUGVERWALTUNG BEI ERSCHWERTEN BEDINGUNGEN BEI UNFÄHIGHEIT VON MINDESTENS EINEM KOMMANDIERENDEN PILOTEN
METHOD AND DEVICE FOR FLIGHT MANAGEMENT IN CASE OF A DIFFICULT CONTEXT IN THE EVENT OF THE INCAPACITATION OF AT LEAST ONE PILOT IN COMMAND

(30) Priorité: 31.01.2023 FR 2300886
(43) Date de publication de la demande: 04.09.2024
(73) Titulaire: Airbus SAS, 31700 Blagnac (FR); AIRBUS OPERATIONS (SAS), 31060 Toulouse (FR)
(72) Inventeur: RAYNAUD, Sylvain, 31060 TOULOUSE (FR); RUSTIN, Mathieu, 31060 TOULOUSE (FR); DA COSTA GOMES, Hélène, 31060 TOULOUSE (FR); SIBELLE, Vincent, 31700 BLAGNAC (FR); VAN DER STICHEL, Hugues, 31700 BLAGNAC (FR)
(74) Mandataire: Gevers & Orès

(56) Documents cités:
- EP-A2- 2 506 105
- US-A1- 2007 043 482
- US-A1- 2008 243 315
- US-A1- 2017 249 852
- ANONYMOUS TAB: "FMS-3000 (excerpt)", 24 June 2005 (2005-06-24), XP093073159, Retrieved from the Internet <URL:https://www.smartcockpit.com/docs/P180_Avanti-FMS-3000_Guide.pdf> [retrieved on 20230811]

## Description

### Domaine technique

La présente invention concerne un procédé et un dispositif de gestion de vol en cas de contexte difficile mise en oeuvre par une unité de traitement d'un calculateur avionique d'un aéronef, lorsque l'aéronef se présente dans une phase de vol dans laquelle un seul pilote est aux commandes (« pilot flying » en anglais) de l'aéronef au lieu de deux pilotes.

### État de la technique

Le contexte difficile peut correspondre à une phase de trajectoire d'un aéronef survolant des terrains à hautes altitudes (hautes montagnes) ou à une phase de trajectoire répondant à une réglementation ETOPS (« Extended-range Twin-engine Operation Performance Standards » en anglais pour « exploitation de bimoteurs long-courriers au-dessus des océans » en français). La réglementation ETOPS permet à des aéronefs équipés de deux moteurs d'emprunter des trajectoires traversant des secteurs à plus d'une heure d'un aéroport de déroutement.

La phase de vol dans laquelle un seul pilote est aux commandes est gérée par un ensemble d'opérations appelée eMCO (« extended Minimum Crew Operations » en anglais pour « exploitation en équipage minimum étendue »). Cet ensemble d'opérations eMCO met en oeuvre des systèmes, des fonctions et des procédures qui permettent de pallier l'absence temporaire d'un deuxième pilote qui peut être en repos.

Quand l'aéronef se présente dans une phase de trajectoire dans un contexte difficile et dans une phase de vol gérée par l'ensemble d'opérations eMCO, le pilote aux commandes peut entrer dans le calculateur avionique de l'aéronef un plan de vol secondaire. Or, pendant un vol, il peut arriver que le seul pilote aux commandes ne soit pas capable de gérer le pilotage de l'aéronef, par exemple, à cause d'une dégradation de son état psychophysiologique ou pour d'autres raisons. Le seul pilote aux commandes peut alors entrer des données erronées pour le plan de vol secondaire.

US 2007/043482 A1 divulgue un système de descente d'urgence qui est prévu pour effectuer automatiquement une descente d'urgence dans un véhicule. Le système surveille l'altitude de la pression de la cabine et si l'altitude de la pression de la cabine dépasse une valeur prédéfinie, le système de descente d'urgence peut ordonner au pilote automatique de descendre l'avion jusqu'à l'altitude minimale de sécurité (MSA). Le système de descente d'urgence peut également communiquer avec les installations au sol pour les informer de la descente.

### Exposé de l'invention

La présente invention concerne un procédé et un dispositif de gestion de vol en cas de contexte difficile permettant de pallier cet inconvénient.

Le procédé de gestion de vol est destiné à être mis en œuvre pour un aéronef volant selon un plan de vol principal.

Selon l'invention, le procédé comporte les étapes suivantes :
- une étape de mise en service pour mettre en œuvre l'ensemble des étapes suivantes lorsque l'aéronef se trouve dans un cas de contexte difficile,
- une étape de préparation dans laquelle :
   o des données de plan de vol secondaires sont entrées par un pilote aux commandes de l'aéronef dans une première mémoire d'au moins un calculateur avionique à bord de l'aéronef à l'aide d'un dispositif de saisie, les données de plan de vol secondaire entrées par le pilote aux commandes comprenant au moins un identifiant d'au moins un point de cheminement et au moins une contrainte d'altitude du ou des points de cheminement, et
   o des données de plan de vol secondaire sont déterminées par le ou les calculateurs avioniques à partir des données de plan de vol secondaire entrées par le pilote aux commandes et à partir de performances de l'aéronef, les données de plan de vol secondaire déterminées comprenant au moins une position du ou des points de cheminement et au moins une trajectoire de secours,
- une étape d'avertissement mise en œuvre par un premier module pour détecter et avertir le pilote aux commandes que des données erronées ont été entrées dans le plan de vol secondaire lors de l'étape de préparation,
- une étape de surveillance :
   o mise en œuvre par un deuxième module de pour surveiller une pression dans une cabine de l'aéronef à partir de mesures de pression transmises par des capteurs de pression dans la cabine et
   o **mise en** œuvre par un troisième module pour surveiller un fonctionnement d'au moins un moteur de l'aéronef à partir de données transmises par des capteurs de fonctionnement de moteur ;
- une étape de détermination mise en œuvre par un quatrième module pour déterminer une capacité du pilote aux commandes ;
- une étape d'activation mise en œuvre par un cinquième module pour activer automatiquement une trajectoire de secours correspondant à la trajectoire de secours définie entre des positions de deux points de cheminement consécutifs entre lesquels se trouve l'aéronef, l'étape d'activation étant mise en œuvre :
   o si l'aéronef se présente dans un contexte difficile,
   o si, d'une part, une dépressurisation de la cabine est détectée dans l'étape de surveillance ou si une panne d'au moins un moteur est détectée dans l'étape de surveillance et
   o si, d'autre part, une incapacité du pilote aux commandes est détectée dans l'étape de détermination.

Ainsi, grâce à l'étape d'avertissement, il est possible de s'assurer que les données entrées par le pilote aux commandes ne sont pas erronées.

De plus, le procédé est mis en œuvre lorsque l'aéronef se présente dans une phase de vol dans laquelle un seul pilote est aux commandes de l'aéronef.

Selon un premier mode de réalisation, l'étape d'avertissement comprend les sous-étapes suivantes :
- une première sous-étape de détermination pour déterminer une trajectoire verticale à partir du ou des identifiants du ou des points de cheminement, de la ou des positions du ou des points d'acheminement, de la ou des altitudes du ou des points de cheminement et de la ou des trajectoires de secours,
- une première sous-étape de transmission pour transmettre à une base de données d'altitudes la trajectoire verticale déterminée dans la première sous-étape de détermination,
- une deuxième sous-étape de détermination mise en œuvre par la base de données d'altitudes pour déterminer une courbe de relief de terrain correspondant aux données d'altitude à la verticale de la trajectoire verticale,
- une sous-étape de comparaison mise en œuvre par la base de données d'altitudes pour comparer la trajectoire verticale et la courbe de relief de terrain,
- une deuxième sous-étape de transmission mise en œuvre par la base de données d'altitudes pour générer au moins un signal représentatif d'une alerte si la trajectoire verticale est susceptible de croiser la courbe de relief de terrain,
- une sous-étape d'avertissement pour signaler au pilote aux commandes que des données erronées ont été entrée dans le ou les calculateurs avioniques.

Selon un deuxième mode de réalisation, l'étape d'avertissement comprend les sous-étapes suivantes :
- une première sous-étape de comparaison pour comparer, d'une part, le ou les identifiants du ou des points de cheminement du plan de vol secondaire et un ou des identifiants d'au moins un points de cheminement préalablement stockés dans une deuxième mémoire du ou des calculateurs avioniques et, d'autre part, la ou les contraintes d'altitude du ou des points de cheminement du plan de vol secondaire et une ou des contraintes d'altitude d'au moins un points de cheminement préalablement stockées dans la deuxième mémoire du ou des calculateurs avioniques,
- une deuxième sous-étape de comparaison pour comparer un ordre de points de cheminement préalablement stockés dans la deuxième mémoire du ou des calculateurs avioniques et un ordre de points de cheminement du plan de vol secondaire,
- une première sous-étape d'avertissement pour signaler au pilote aux commandes qu'au moins un identifiant d'un point de cheminement du plan de vol secondaire ne correspond pas à au moins un identifiant d'au moins un point de cheminement préalablement stocké dans la deuxième mémoire du ou des calculateurs avioniques ou qu'au moins une contrainte d'altitude d'un point de cheminement du plan de vol secondaire ne correspond pas à au moins une contrainte d'altitude d'au moins un point de cheminement préalablement stocké dans la deuxième mémoire du ou des calculateurs avioniques,
- une deuxième sous-étape d'avertissement pour signaler au pilote aux commandes que l'ordre des points de cheminement du plan de vol secondaire ne correspond pas à l'ordre de points de cheminement préalablement stockés dans la deuxième mémoire du ou des calculateurs avioniques.

Par ailleurs, la trajectoire de secours correspond à une trajectoire de secours vers un aéroport de déroutement, ladite trajectoire de secours correspondant à une trajectoire de secours vers un aéroport de déroutement en fonction de la position courante l'aéronef.

De plus, la trajectoire de secours correspond à une trajectoire d'évacuation de survie vers une altitude de survie.

En outre, selon l'invention, l'étape d'activation comprend une sous-étape d'inhibition pour inhiber un système de protection en altitude pour atteindre l'altitude de survie dans un temps correspondant à un temps d'autonomie à l'oxygène de l'aéronef si une dépressurisation de la cabine est détectée ou pour atteindre une altitude d'équilibre si une panne d'au moins un moteur est détectée.

L'invention concerne également un dispositif de gestion de vol en cas de contexte difficile, le dispositif étant embarqué à bord d'un aéronef volant selon un plan de vol principal.

Selon l'invention, le dispositif comprend :
- un premier module configuré pour détecter et avertir le pilote aux commandes que des données erronées ont été entrées dans un plan de vol secondaire quand un pilote aux commandes de l'aéronef a entré dans une première mémoire d'au moins un calculateur avionique à bord de l'aéronef **des données** de plan de vol secondaire à l'aide d'un dispositif de saisie, les données de plan de vol secondaire comprenant au moins un identifiant d'au moins un point de cheminement et au moins une contrainte d'altitude du ou des points de cheminement, le ou les calculateurs avioniques étant configurés pour déterminer des données de plan de vol secondaire à partir des données de plan de vol secondaire entrées par le pilote aux commandes et à partir de performances de l'aéronef, les données de plan de vol secondaire déterminées comprenant au moins une position du ou des points de cheminement et au moins une trajectoire de secours,
- un deuxième module configuré pour surveiller une pression dans une cabine de l'aéronef à partir de mesures de pression transmises par des capteurs de pression dans la cabine et
- un troisième module configuré pour surveiller un fonctionnement d'au moins un moteur de l'aéronef à partir de données transmises par des capteurs de fonctionnement de moteur ;
- un quatrième module configuré pour déterminer une capacité du pilote aux commandes ;
- un cinquième module pour activer automatiquement une trajectoire de secours correspondant à la trajectoire de secours définie entre les positions de deux points de cheminement consécutifs entre lesquels se trouve l'aéronef, la trajectoire de secours étant activée :
   o si l'aéronef se présente dans un contexte difficile,
   o si, d'une part, une dépressurisation de la cabine est détectée par le deuxième module ou si une panne d'au moins un moteur est détectée par le troisième module et
   o si, d'autre part, une incapacité du pilote aux commandes est détectée par le quatrième module.

Selon le premier mode de réalisation, pour avertir le pilote aux commandes, le premier module est en outre configuré pour :
- déterminer une trajectoire verticale à partir du ou des identifiants du ou des points de cheminement, de la ou des positions du ou des points de cheminement, de la ou des altitudes du ou des points de cheminement et de la ou des trajectoires de secours,
- transmettre à une base de données d'altitudes la trajectoire verticale afin que la base de données d'altitudes détermine une courbe de relief de terrain correspondant aux données d'altitude à la verticale de la trajectoire verticale,
- signaler au pilote aux commandes que des données erronées ont été entrée dans la première mémoire du ou des calculateurs avioniques après que la base de données d'altitudes a comparé la trajectoire verticale et la courbe de relief de terrain et a généré un signal représentatif d'une alerte si la trajectoire verticale est susceptible de croiser la courbe de relief de terrain.

Selon le deuxième mode de réalisation, pour avertir le pilote aux commandes, le premier module est configuré pour :
- comparer, d'une part, le ou les identifiants du ou des points de cheminement du plan de vol secondaire et un ou des identifiants d'au moins un point de cheminement préalablement stockés dans une deuxième mémoire du ou des calculateurs avioniques et, d'autre part, la ou les contraintes d'altitude du ou des points de cheminement du plan de vol secondaire et une ou des contraintes d'altitude d'au moins un point de cheminement préalablement stockées dans la deuxième mémoire du ou des calculateurs avioniques,
- comparer un ordre de points de cheminement préalablement stockés dans la deuxième mémoire du ou des calculateurs avioniques et un ordre de points de cheminement du plan de vol secondaire,
- pour signaler au pilote aux commandes qu'au moins un identifiant d'un point de cheminement du plan de vol secondaire ne correspond pas à au moins un identifiant d'au moins un point de cheminement préalablement stocké ou qu'au moins une contrainte d'altitude d'un point de cheminement du plan de vol secondaire ne correspond pas à au moins une contrainte d'altitude d'au moins un point de cheminement préalablement stocké dans la deuxième mémoire du ou des calculateurs avioniques,
- signaler au pilote aux commandes que l'ordre des points de cheminement du plan de vol secondaire ne correspond pas à l'ordre de points de cheminement préalablement stockés dans la deuxième mémoire du ou des calculateurs avioniques.

Par ailleurs, la trajectoire de secours correspond à une trajectoire de secours vers un aéroport de déroutement, ladite trajectoire de secours correspondant à une trajectoire de secours vers un aéroport de déroutement en fonction de la position courante l'aéronef.

De plus, la trajectoire de secours correspond à une trajectoire d'évacuation de survie vers une altitude de survie.

En outre, selon l'invention, pour activer automatiquement une trajectoire de secours, le cinquième module est configuré pour inhiber un système de protection en altitude pour atteindre l'altitude de survie dans un temps correspondant à un temps d'autonomie à l'oxygène de l'aéronef si une dépressurisation de la cabine est détectée ou pour atteindre une altitude d'équilibre si une panne d'au moins un moteur est détectée.

L'invention concerne également un aéronef comportant un dispositif de gestion de vol, tel que celui spécifié ci-dessus.

### Brève description des figures

Les figures annexées feront bien comprendre comment l'invention peut être réalisée. Sur ces figures, des références identiques désignent des éléments semblables.
La figure 1 est une représentation schématique du dispositif de gestion de vol.
La figure 2 représente schématiquement le procédé de gestion de vol.
La figure 3 représente un profil schématique d'une trajectoire verticale de secours d'un aéronef en cas de dépressurisation de la cabine.
La figure 4 représente un profil schématique d'une trajectoire verticale de secours d'un aéronef en cas de panne d'un moteur.
La figure 5 représente un aéronef embarquant le dispositif de gestion de vol.

### Description détaillée

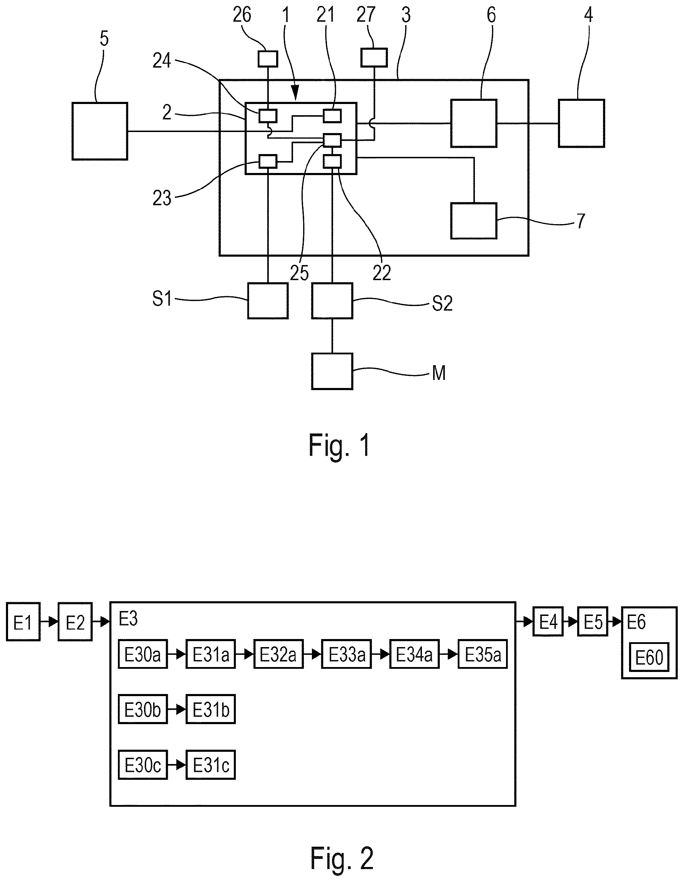

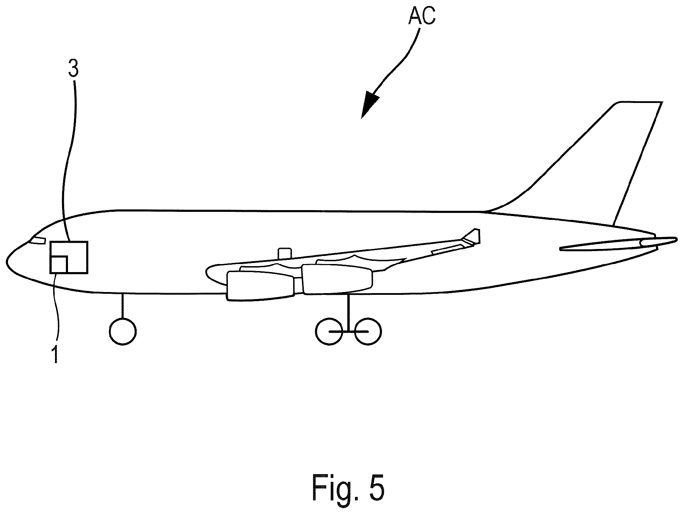

Le dispositif 1 de gestion de vol en cas de contexte difficile, ci-après appelé « dispositif 1 », est représenté très schématiquement sur la figure 1. Le dispositif 1 est destiné à être embarqué à bord d'un aéronef (figure 5) susceptible de voler selon un plan de vol principal.

Le dispositif peut être mis en œuvre lorsque l'aéronef AC se présente dans une phase de vol dans laquelle un seul pilote est aux commandes de l'aéronef AC. Toutefois, il peut aussi être mis en œuvre lorsque l'aéronef AC se présente dans une phase de vol dans laquelle au moins deux pilotes sont aux commandes de l'aéronef AC.

Le dispositif 1 peut être compris dans au moins un calculateur avionique 3 d'un aéronef AC.

Un calculateur avionique 3 correspond un calculateur embarqué à bord de l'aéronef AC. Par exemple un calculateur avionique 3 peut correspondre à un système de gestion de vol FMS (« flight management system » en anglais) de l'aéronef AC, à un calculateur primaire de commande de vol PRIM (« Primary flight control computer » en anglais), à un calculateur secondaire de commande de vol SEC (« Secondary flight control computer » en anglais), à un système de régulation électronique numérique à pleine autorité du moteur FADEC (« Full Authority Digital Engine Control » en anglais), un système de commande de la pression dans la cabine (« cabin pressure control system » en anglais) ou à tout autres calculateurs avioniques embarqués à bord de l'aéronef AC.

Par ailleurs, le dispositif 1 est mis en service en cas de contexte difficile. Le contexte difficile peut correspondre à une phase de trajectoire d'un aéronef AC survolant des terrains à hautes altitudes ou à une phase de trajectoire répondant à une réglementation ETOPS.

Dans un mode de réalisation, la mise en service du dispositif 1 peut être réalisée à l'aide d'un bouton dans le poste de pilotage de l'aéronef AC. Un pilote aux commandes peut presser le bouton pour mettre en service le dispositif.

Dans un autre mode de réalisation, la mise en service du dispositif 1 peut être réalisée à l'aide de paramètres définis dans le plan de vol principal dans lequel un point de cheminement (« waypoint » en anglais) de début de mise en service et un point de cheminement de fin délimitent la mise en service du dispositif 1.

Quand l'aéronef AC se présente dans un contexte difficile, le pilote aux commandes prépare un plan de vol secondaire. Pour cela, il entre dans une première mémoire 6 du ou des calculateurs avioniques 3 à bord de l'aéronef AC des données de plan de vol secondaire à l'aide d'un dispositif de saisie 4.

Les données de plan de vol secondaire entrées par le pilote aux commandes comprennent au moins un identifiant d'au moins un point de cheminement et au moins une contrainte d'altitude du ou des points de cheminement.

Des données de plan de vol secondaire sont également déterminées par le ou les calculateurs avioniques 3, par exemple le FMS, à partir des données de plan de vol secondaire entrées par le pilote aux commandes et à partir de performances de l'aéronef AC. Les performances de l'aéronef AC peuvent correspondre à un ensemble de qualités qui caractérisent les prestations (accélération, vitesse maximale, autonomie, etc.) dont l'aéronef AC est capable. Les données de plan de vol secondaire déterminées comprennent au moins une position du ou des points de cheminement et au moins une trajectoire de secours. Les données de plan de vol secondaires déterminées par le ou les calculateurs avioniques 3 peuvent également être stockées dans la première mémoire 6 du ou des calculateurs avioniques 3.

Le dispositif 1 comprend un premier module 21 configuré pour détecter et avertir le pilote aux commandes de l'aéronef AC que des données erronées ont été entrées dans la première mémoire 6 du ou des calculateurs avioniques 3 quand le pilote aux commandes a entré dans la première mémoire 6 les données de plan de vol secondaire.

Le premier module 21 ou bien le ou les calculateurs avioniques 3 peut alors être configuré pour inviter le pilote aux commandes à entrer de nouvelles données de plan de vol secondaire.

Le premier module 21 peut correspondre au calculateur FMS.

Le pilote aux commandes peut alors entrer des données de plan de vol correctes.

Le dispositif 1 comprend également :
- un deuxième module 22 configuré pour surveiller une pression dans une cabine de l'aéronef AC à partir de mesures de pression transmises par des capteurs de pression S1 dans la cabine et
- un troisième module 23 pour surveiller un fonctionnement d'au moins un moteur M de l'aéronef AC à partir de données transmises par des capteurs de fonctionnement S2 de moteur M.

Le deuxième module 22 peut ainsi détecter une dépressurisation de la cabine si la pression dans la cabine mesurée par les capteurs de pression S1 est inférieure ou égale à une pression seuil prédéterminée. Le troisième module 23 peut aussi détecter une panne d'au moins un moteur M en fonction de données transmises par les capteurs de fonctionnement S2 de moteur M.

Le calculateur avionique 3 mettant en œuvre le deuxième module 2 peut être un système de commande de la pression dans la cabine.

Le calculateur avionique 3 mettant en œuvre le troisième module 23 peut être un calculateur FADEC.

Le dispositif 1 comprend également un quatrième module 24 configuré pour déterminer une capacité du pilote aux commandes.

Selon un mode de réalisation, la capacité du pilote peut être déterminée à l'aide de capteurs tels que des capteurs de paramètres physiologiques 26 du pilote aux commandes. En fonction des paramètres physiologiques mesurés par ces capteurs, le quatrième module 24 est en mesure de déterminer la capacité du pilote aux commandes. Le quatrième module 24 est configuré pour déterminer une incapacité du pilote aux commandes en fonction des paramètres physiologiques.

Selon un autre mode de réalisation, la capacité du pilote peut être déterminée en fonction d'une réponse attendue par le ou les calculateurs avioniques 3, tel que le calculateur FMS, suite à une invitation à entrer les données de plan de vol secondaire. Dans ce mode de réalisation, le quatrième module 24 est configuré pour déterminer une incapacité du pilote aux commandes si aucune donnée n'est entrée au bout d'un temps prédéterminée.

Le dispositif 1 comprend aussi un cinquième module 25 configuré pour activer automatiquement une trajectoire de secours correspondant à la trajectoire de secours définie entre les positions de deux points de cheminement consécutifs entre lesquels se trouve l'aéronef AC.

Le calculateur avionique 3 mettant en œuvre le cinquième module 25 peut être un calculateur primaire de commande de vol PRIM.

Une activation d'une trajectoire ou d'un plan de vol correspond à une mise en œuvre de la trajectoire ou du plan de vol par un dispositif 21 de commande de l'aéronef AC, tel qu'un pilote automatique, configuré pour que l'aéronef AC vole selon la trajectoire ou le plan de vol.

La trajectoire de secours est activée :
- si l'aéronef AC se présente dans un contexte difficile,
- si, d'une part, une dépressurisation de la cabine est détectée par le deuxième module 22 ou si une panne d'au moins un moteur M est détectée par le troisième module 23 et
- si, d'autre part, une incapacité du pilote aux commandes est détectée par le quatrième module 24.

Dans un mode de réalisation du dispositif 1 représenté sur la figure 1, le dispositif 1 comprend une unité de traitement 2 comprenant le premier module 21, le deuxième module 22, le troisième module 23, le quatrième module 24 et le cinquième module 25. L'unité de traitement 2 est compris dans un calculateur avionique 3.

Dans d'autres modes de réalisations, les modules 21 à 25 sont compris dans un seul calculateur avionique 3 ou bien sont répartis dans plusieurs calculateurs avioniques 3 qui peuvent être situés à différents endroits à bord de l'aéronef AC.

En outre, les modules 21 à 25 et/ou l'unité de traitement 2 peuvent être doublés.

Les modules 21 à 25 peuvent être intégrés de façon logicielle dans le ou les calculateurs avioniques 3.

Dans un premier mode de réalisation, pour détecter et avertir le pilote aux commandes que des données erronées ont été entrées dans la première mémoire 6 du ou des calculateurs avioniques 3, le premier module 21 est configuré pour :
- déterminer une trajectoire verticale à partir du ou des identifiants du ou des points de cheminement, de la ou des positions du ou des points de cheminement, de la ou des altitudes du ou des points de cheminement et de la ou des trajectoires de secours,
- transmettre à une base de données d'altitudes 5 la trajectoire verticale, afin que la base de données d'altitudes 5 détermine une courbe de relief de terrain correspondant aux données d'altitude à la verticale de la trajectoire verticale,
- signaler au pilote aux commandes que des données erronées ont été entrée dans la première mémoire 6 du ou des calculateurs avioniques 3 après que la base de données d'altitudes 5 a comparé la trajectoire verticale et la courbe de relief de terrain et a généré un signal représentatif d'une alerte si la trajectoire verticale est susceptible de croiser la courbe de relief de terrain.

Le signalement au pilote aux commandes peut être réalisé par tout moyen tel qu'un message d'alerte sur l'écran de navigation de l'aéronef AC, un message d'alerte sur la page de plan de vol, une alarme sonore ou une combinaison de ces derniers.

La base de données d'altitudes 5 peut correspondre à un système de surveillance de l'environnement de l'aéronef AESS (« Aircraft Environmental Surveillance System » en anglais).

Dans un deuxième mode de réalisation, pour détecter et avertir le pilote aux commandes que des données erronées ont été entrées dans la première mémoire 6 du ou des calculateurs avioniques 3, le premier module 21 est configuré pour :
- comparer, d'une part, le ou les identifiants du ou des points de cheminement du plan de vol secondaire et un ou des identifiants d'au moins un points de cheminement préalablement stockés dans une deuxième mémoire 7 du ou des calculateurs avioniques 3 et, d'autre part, la ou les contraintes d'altitude du ou des points de cheminement du plan de vol secondaire et une ou des contraintes d'altitude d'au moins un points de cheminement préalablement stockées dans la deuxième mémoire 7 du ou des calculateurs avioniques 3,
- comparer un ordre de points de cheminement préalablement stockés dans la deuxième mémoire 7 du ou des calculateurs avioniques 3 et un ordre de points de cheminement du plan de vol secondaire,
- pour signaler au pilote aux commandes qu'au moins un identifiant d'un point de cheminement du plan de vol secondaire ne correspond pas à au moins un identifiant d'au moins un point de cheminement préalablement stocké ou qu'au moins une contrainte d'altitude d'un point de cheminement du plan de vol secondaire ne correspond pas à au moins une contrainte d'altitude d'au moins un point de cheminement préalablement stocké dans la deuxième mémoire 7 du ou des calculateurs avioniques 3
- signaler au pilote aux commandes que l'ordre des points de cheminement du plan de vol secondaire ne correspond pas à l'ordre de points de cheminement préalablement stockés dans la deuxième mémoire 7 du ou des calculateurs avioniques 3.

Par exemple, le ou les identifiants du ou des points de cheminement du plan de vol secondaire et un ou des identifiants d'au moins un point de cheminement sont préalablement stockés dans la deuxième mémoire 7 du ou des calculateurs avioniques 3 par la compagnie aérienne. La deuxième mémoire 7 peut correspondre à une base de données de navigation du ou des calculateurs avioniques 3.

Par ailleurs, la trajectoire de secours peut correspondre à une trajectoire de secours vers un aéroport de déroutement si le contexte difficile correspond à une phase de trajectoire répondant à une réglementation ETOPS. Ladite trajectoire de secours correspond à une trajectoire de secours vers un aéroport de déroutement en fonction de la position courante de l'aéronef AC.

Au moins une trajectoire de secours vers un aéroport de déroutement est définie dans le plan de vol secondaire. Pour cela, le pilote aux commandes définit des points équi-temps (« equal time point » en anglais) sur la trajectoire de l'aéronef. Un aéroport de déroutement est défini entre chacun des points équi-temps. L'aéronef AC est donc susceptible d'être dérouter vers l'aéroport de déroutement défini en fonction de la position courante de l'aéronef AC. Cette configuration permet d'éviter une discontinuité entre le plan de vol secondaire et la trajectoire de secours. Pour la première portion, le ou les calculateurs avioniques 3 peuvent mettre en œuvre la fonction DIR-TO.

Si une dépressurisation de la cabine est détectée, la trajectoire de secours est réalisée par la mise en œuvre d'une fonction de descente d'urgence automatique AED (pour « automatic emergency descent » en anglais) du ou des calculateurs avioniques 3 selon une procédure usuelle.

Si une panne d'un moteur M est détectée, le ou les calculateurs avioniques 3 mettent en œuvre un mode de guidage usuel en cas de panne de moteur M.

De plus, la trajectoire de secours peut correspond à une trajectoire d'évacuation de survie (« oxygen escape route » en anglais). Cette configuration permet d'éviter une discontinuité entre le plan de vol secondaire et la trajectoire de secours. Pour la première portion, le ou les calculateurs avioniques 3 peuvent mettre en œuvre la fonction DIR-TO.

Pour cette trajectoire, l'aéronef AC est amené à descendre à une altitude à laquelle la température extérieure, la pression et la concentration en oxygène dans l'air sont suffisantes pour la survie des passagers et de l'équipage de l'aéronef AC. Cette altitude est appelée « altitude de survie » dans la suite de la description.

Dans le cas d'une dépressurisation de la cabine, la descente de l'aéronef AC est dépendante du temps. L'aéronef AC doit atteindre l'altitude de survie avant que l'épuisement de l'approvisionnement en oxygène dans la cabine. Le temps avant l'épuisement en oxygène correspond au temps d'autonomie en oxygène (« oxygen endurance time » en anglais).

L'aéronef AC peut rester à une altitude aussi haute que possible afin d'éviter les obstacles jusqu'à ce qu'il puisse descendre afin d'atteindre l'altitude de survie dans l'intervalle de temps d'autonomie en oxygène.

Au moins une trajectoire d'évacuation de survie est définie dans le plan de vol secondaire. La trajectoire en contexte difficile est découpée en plusieurs segments. Pour chaque segment, une trajectoire d'évacuation de survie est définie en commençant à partir d'un repère d'évacuation (« escape fix » en anglais). Le repère d'évacuation peut correspondre à un point de cheminement provenant d'une aide à la navigation aérienne au sol ou à un point de cheminement mémorisé dans le ou les calculateurs avioniques 3.

Par ailleurs, pour activer automatiquement une trajectoire de secours, le cinquième module 25 est configurée pour inhiber un système de protection en altitude :
- pour atteindre l'altitude de survie dans un temps correspondant à un temps d'autonomie en oxygène de l'aéronef AC si une dépressurisation de la cabine est détectée ou
- pour atteindre une altitude d'équilibre si une panne d'au moins un moteur M est détectée.

Le système de protection en altitude met en œuvre un « filet de sécurité » de l'aéronef AC afin de protéger l'aéronef AC de commandes de guidage erronés en stabilisant l'aéronef AC à une altitude de sécurité prédéterminée. L'altitude de sécurité prédéterminée est déterminée à partir d'une base de données d'altitudes. Cette base de données d'altitudes fournit une grille d'altitudes de vol minimum MORA (pour minimum off-route altitude » en anglais). Cette grille offre une marge (« clearance » en anglais) de franchissement d'obstacle de 2000 pieds (610 m environ), si le point culminant est supérieur à 5000 pieds (1525 m environ) et de 1000 pieds (305 m environ) sinon.

L'inhibition du système de protection en altitude permet de descendre l'aéronef sous l'altitude de sécurité prédéterminée par la base de données d'altitudes afin d'atteindre l'altitude de survie ou l'altitude d'équilibre.

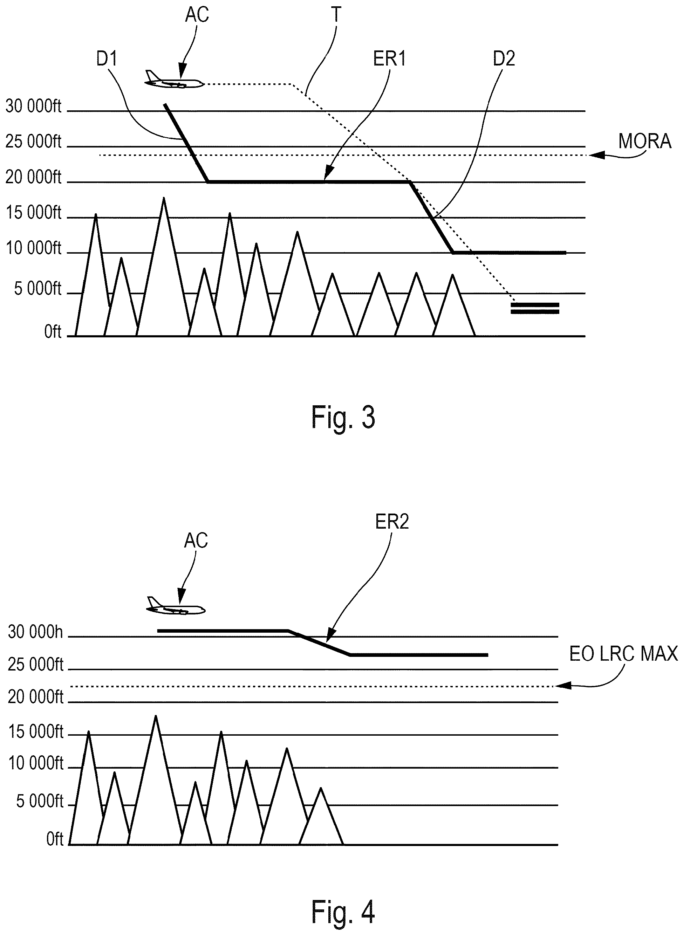

Si une dépressurisation de la cabine est détectée (figure 3), la trajectoire de secours ER1 est réalisée par la mise en œuvre de la fonction AED du ou des calculateurs avioniques 3. Le guidage par cette fonction AED permet d'atteindre des contraintes d'altitude choisies par le pilote aux commandes dans le plan de vol secondaire, en particulier pour atteindre une altitude sous l'altitude de sécurité MORA prédéterminée en construisant des descentes successives D1, D2. La descente complète est arrêtée quand l'altitude de survie est atteinte. La fonction AED définit également une vitesse cible de l'aéronef AC. Le profil de trajectoire T correspond à un profil de trajectoire construite par le ou les calculateurs avioniques 3 si aucune dépressurisation n'avait été détectée.

Si une panne d'un moteur M est détectée (figure 4), pour la trajectoire de secours ER2, le ou les calculateurs avioniques 3 déterminent une altitude maximale de croisière à longue distance en cas de panne de moteur (altitude LRC EO MAX pour « long-range cruise engine-out maximum altitude » en anglais). Le guidage vertical et la vitesse de l'aéronef AC sont, par exemple, gérés par un ordinateur de contrôle des commandes de vol principales PRIM (pour « primary flight control computer » en anglais). L'aéronef AC est mis en palier par l'ordinateur PRIM jusqu'à atteindre une vitesse dite « greendot ». La vitesse « greendot » correspond à une vitesse pour laquelle le rapport sustentation sur résistance à l'avancement (« lift-to-drag ratio » en anglais) est le plus grand pour l'aéronef AC. Lorsque la vitesse greendot est atteinte, l'ordinateur PRIM commande à l'aéronef de descendre vers l'altitude LRC EO MAX.

L'invention concerne également un procédé de gestion de vol en cas de contexte difficile (figure 2).

Le procédé est destiné à être mis en œuvre pour un aéronef AC volant selon un plan de vol principal. Le procédé peut être susceptible d'être mis en œuvre par au moins un calculateur avionique 3 de l'aéronef AC.

Le procédé comporte les étapes suivantes :
- une étape E1 de mise en service pour mettre en œuvre l'ensemble des étapes suivantes lorsque l'aéronef AC se trouve dans un cas de contexte difficile ;
- une étape E2 de préparation ;
- une étape E3 d'avertissement mise en œuvre par le premier module 21 pour détecter et avertir le pilote aux commandes que des données erronées ont été entrées dans le plan de vol secondaire lors de l'étape E2 de préparation ;
- une étape E4 de surveillance :
   mise en œuvre par le deuxième module 22 pour surveiller une pression dans une cabine de l'aéronef AC à partir de mesures de pression transmises par des capteurs de pression S1 dans la cabine et
   mise en œuvre par le troisième module 23 pour surveiller un fonctionnement d'au moins un moteur M de l'aéronef AC à partir de données transmises par des capteurs de fonctionnement S2 de moteur M ;
- une étape E5 de détermination mise en œuvre par le quatrième module 24 pour déterminer une capacité du pilote aux commandes ;
- une étape E6 d'activation mise en œuvre par le cinquième module 25 pour activer automatiquement une trajectoire de secours correspondant à la trajectoire de secours définie entre les positions de deux points de cheminement consécutifs entre lesquels se trouve l'aéronef AC.

Dans l'étape E2 de préparation, le pilote aux commandes de l'aéronef AC entre des données de plan de vol secondaires dans une première mémoire 6 du ou des calculateurs avioniques 3 à l'aide d'un dispositif de saisie 4. Les données de plan de vol secondaire entrées par le pilote aux commandes comprennent au moins un identifiant d'au moins un point de cheminement et au moins une contrainte d'altitude du ou des points de cheminement. En outre, le ou les calculateurs avioniques 3 déterminent des données de plan de vol secondaire à partir des données de plan de vol secondaire entrées par le pilote aux commandes et à partir de performances de l'aéronef AC. Les données de plan de vol secondaire déterminées comprennent au moins une position du ou des points de cheminement et au moins une trajectoire de secours.

L'étape E6 d'activation est mise en œuvre :
- si l'aéronef AC se présente dans un contexte difficile,
- si, d'une part, une dépressurisation de la cabine est détectée dans l'étape E4 de surveillance ou si une panne d'au moins un moteur M est détectée dans l'étape E4 de surveillance et
- si, d'autre part, une incapacité du pilote aux commandes est détectée dans l'étape E5 de détermination.

Selon le premier mode de réalisation, l'étape E3 d'avertissement comprend les sous-étapes suivantes :
- une première sous-étape E30a de détermination pour déterminer une trajectoire verticale à partir du ou des identifiants du ou des points de cheminement, de la ou des positions du ou des points d'acheminement, de la ou des altitudes du ou des points de cheminement et de la ou des trajectoires de secours ;
- une première sous-étape E31a de transmission pour transmettre à la base de données d'altitudes 5 la trajectoire verticale déterminée dans la première sous-étape E30a de détermination ;
- une deuxième sous-étape E32a de détermination mise en œuvre par la base de données d'altitudes 5 pour déterminer une courbe de relief de terrain correspondant aux données d'altitude à la verticale de la trajectoire verticale ;
- une sous-étape E33a de comparaison mise en œuvre par la base de données d'altitudes 5 pour comparer la trajectoire verticale et la courbe de relief de terrain ;
- une deuxième sous-étape E34a de transmission mise en œuvre par la base de données d'altitudes 5 pour générer au moins un signal représentatif d'une alerte si la trajectoire verticale est susceptible de croiser la courbe de relief de terrain ;
- une sous-étape E35a d'avertissement pour signaler au pilote aux commandes que des données erronées ont été entrées dans le ou les calculateurs avioniques 3. Selon le deuxième mode de réalisation, l'étape E3 d'avertissement comprend les sous-étapes suivantes :
- une première sous-étape E30b de comparaison pour comparer, d'une part, le ou les identifiants du ou des points de cheminement du plan de vol secondaire et un ou des identifiants d'au moins un points de cheminement préalablement stockés dans la deuxième mémoire 7 du ou des calculateurs avioniques 3 et, d'autre part, la ou les contraintes d'altitude du ou des points de cheminement du plan de vol secondaire et une ou des contraintes d'altitude d'au moins un points de cheminement préalablement stockées dans la deuxième mémoire 7 du ou des calculateurs avioniques 3 ;
- une deuxième sous-étape E30c de comparaison pour comparer un ordre de points de cheminement préalablement stockés dans la deuxième mémoire 7 du ou des calculateurs avioniques 3 et un ordre de points de cheminement du plan de vol secondaire,
- une première sous-étape E31b d'avertissement pour signaler au pilote aux commandes qu'au moins un identifiant d'un point de cheminement du plan de vol secondaire ne correspond pas à au moins un identifiant d'au moins un point de cheminement préalablement stocké dans la deuxième mémoire 7 du ou des calculateurs avioniques 3 ou qu'au moins une contrainte d'altitude d'un point de cheminement du plan de vol secondaire ne correspond pas à au moins une contrainte d'altitude d'au moins un point de cheminement préalablement stocké dans la deuxième mémoire 7 du ou des calculateurs avioniques 3
- une deuxième sous-étape E31c d'avertissement pour signaler au pilote aux commandes que l'ordre des points de cheminement du plan de vol secondaire ne correspond pas à l'ordre de points de cheminement préalablement stockés dans la deuxième mémoire 7 du ou des calculateurs avioniques 3.

L'étape E6 d'activation comprend une sous-étape E60 d'inhibition pour inhiber un système de protection en altitude :
- pour atteindre l'altitude de survie dans un temps correspondant à un temps d'autonomie à l'oxygène de l'aéronef AC si une dépressurisation de la cabine est détectée ou
- pour atteindre une altitude d'équilibre si une panne d'au moins un moteur (M) est détectée.

## Revendications

1. **Procédé** de gestion de vol en cas de contexte difficile, le procédé étant destiné à être mis en œuvre pour un aéronef (AC) volant selon un plan de vol principal,
le procédé comportant les étapes suivantes :
- une étape (E1) de mise en service pour mettre en œuvre l'ensemble des étapes suivantes lorsque l'aéronef (AC) se trouve dans un cas de contexte difficile,
- une étape (E2) de préparation dans laquelle :
o des données de plan de vol secondaires sont entrées par un pilote aux commandes de l'aéronef (AC) dans une première mémoire (6) d'au moins un calculateur avionique (3) à bord de l'aéronef (AC) à l'aide d'un dispositif de saisie (4), les données de plan de vol secondaire entrées par le pilote aux commandes comprenant au moins un identifiant d'au moins un point de cheminement et au moins une contrainte d'altitude du ou des points de cheminement, et
o des données de plan de vol secondaire sont déterminées par le ou les calculateurs avioniques (3) à partir des données de plan de vol secondaire entrées par le pilote aux commandes et à partir de performances de l'aéronef (AC), les données de plan de vol secondaire déterminées comprenant au moins une position du ou des points de cheminement et au moins une trajectoire de secours,
- une étape (E3) d'avertissement mise en œuvre par un premier module (21) pour détecter et avertir le pilote aux commandes que des données erronées ont été entrées dans le plan de vol secondaire lors de l'étape (E2) de préparation,
- une étape (E4) de surveillance :
o mise en œuvre par un deuxième module (22) pour surveiller une pression dans une cabine de l'aéronef (AC) à partir de mesures de pression transmises par des capteurs de pression (S1) dans la cabine et
o **mise en** œuvre par un troisième module (23) pour surveiller un fonctionnement d'au moins un moteur (M) de l'aéronef (AC) à partir de données transmises par des capteurs de fonctionnement (S2) de moteur (M) ;
- une étape (E5) de détermination mise en œuvre par un quatrième module (24) pour déterminer une capacité du pilote aux commandes ;
- une étape (E6) d'activation mise en œuvre par un cinquième module (25) pour activer automatiquement une trajectoire de secours correspondant à la trajectoire de secours définie entre des positions de deux points de cheminement consécutifs entre lesquels se trouve l'aéronef (AC), l'étape (E6) d'activation étant mise en œuvre :
o si l'aéronef (AC) se présente dans un contexte difficile,
o si, d'une part, une dépressurisation de la cabine est détectée dans l'étape (E4) de surveillance ou si une panne d'au moins un moteur (M) est détectée dans l'étape (E4) de surveillance et
o si, d'autre part, une incapacité du pilote aux commandes est détectée dans l'étape (E5) de détermination ;
le procédé étant **caractérisé en ce que** l'étape (E6) d'activation comprend une sous-étape (E60) d'inhibition pour inhiber un système de protection en altitude pour atteindre l'altitude de survie dans un temps correspondant à un temps d'autonomie à l'oxygène de l'aéronef (AC) si une dépressurisation de la cabine est détectée ou pour atteindre une altitude d'équilibre si une panne d'au moins un moteur (M) est détectée.

2. Procédé selon la revendication 1,
**caractérisé en ce qu'**il est mis en œuvre lorsque l'aéronef (AC) se présente dans une phase de vol dans laquelle un seul pilote est aux commandes de l'aéronef (AC).

3. Procédé selon l'une des revendications 1 et 2,
**caractérisé en ce que** l'étape (E3) d'avertissement comprend les sous-étapes suivantes :
- une première sous-étape (E30a) de détermination pour déterminer une trajectoire verticale à partir du ou des identifiants du ou des points de cheminement, de la ou des positions du ou des points d'acheminement, de la ou des altitudes du ou des points de cheminement et de la ou des trajectoires de secours,
- une première sous-étape (E31a) de transmission pour transmettre à une base de données d'altitudes (5) la trajectoire verticale déterminée dans la première sous-étape (E30a) de détermination,
- une deuxième sous-étape (E32a) de détermination mise en œuvre par la base de données d'altitudes (5) pour déterminer une courbe de relief de terrain correspondant aux données d'altitude à la verticale de la trajectoire verticale,
- une sous-étape (E33a) de comparaison mise en œuvre par la base de données d'altitudes (5) pour comparer la trajectoire verticale et la courbe de relief de terrain,
- une deuxième sous-étape (E34a) de transmission mise en œuvre par la base de données d'altitudes (5) pour générer au moins un signal représentatif d'une alerte si la trajectoire verticale est susceptible de croiser la courbe de relief de terrain,
- une sous-étape (E35a) d'avertissement pour signaler au pilote aux commandes que des données erronées ont été entrée dans le ou les calculateurs avioniques (3).

4. Procédé selon l'une des revendications 1 et 2,
**caractérisé en ce que** l'étape (E3) d'avertissement comprend les sous-étapes suivantes :
- une première sous-étape (E30b) de comparaison pour comparer, d'une part, le ou les identifiants du ou des points de cheminement du plan de vol secondaire et un ou des identifiants d'au moins un points de cheminement préalablement stockés dans une deuxième mémoire (7) du ou des calculateurs avioniques (3) et, d'autre part, la ou les contraintes d'altitude du ou des points de cheminement du plan de vol secondaire et une ou des contraintes d'altitude d'au moins un points de cheminement préalablement stockées dans la deuxième mémoire (7) du ou des calculateurs avioniques (3), et
- une deuxième sous-étape (E30c) de comparaison pour comparer un ordre de points de cheminement préalablement stockés dans la deuxième mémoire (7) du ou des calculateurs avioniques (3) et un ordre de points de cheminement du plan de vol secondaire,
- une première sous-étape (E31b) d'avertissement pour signaler au pilote aux commandes qu'au moins un identifiant d'un point de cheminement du plan de vol secondaire ne correspond pas à au moins un identifiant d'au moins un point de cheminement préalablement stocké dans la deuxième mémoire (7) du ou des calculateurs avioniques (3) ou qu'au moins une contrainte d'altitude d'un point de cheminement du plan de vol secondaire ne correspond pas à au moins une contrainte d'altitude d'au moins un point de cheminement préalablement stocké dans la deuxième mémoire (7) du ou des calculateurs avioniques (3), et
- une deuxième sous-étape (E31c) d'avertissement pour signaler au pilote aux commandes que l'ordre des points de cheminement du plan de vol secondaire ne correspond pas à l'ordre de points de cheminement préalablement stockés dans la deuxième mémoire (7) du ou des calculateurs avioniques (3).

5. Procédé selon l'une des revendications 1 à 4,
**caractérisé en ce que** la trajectoire de secours correspond à une trajectoire de secours vers un aéroport de déroutement, ladite trajectoire de secours correspondant à une trajectoire de secours vers un aéroport de déroutement en fonction de la position courante l'aéronef (AC).

6. Procédé selon l'une des revendications 1 à 4,
**caractérisé en ce que** la trajectoire de secours correspond à une trajectoire d'évacuation de survie vers une altitude de survie.

7. Dispositif de gestion de vol en cas de contexte difficile, le dispositif étant embarqué à bord d'un aéronef (AC) volant selon un plan de vol principal,
le dispositif comprenant :
- un premier module (21) configuré pour détecter et avertir le pilote aux commandes que des données erronées ont été entrées dans un plan de vol secondaire quand un pilote aux commandes de l'aéronef (AC) a entré dans une première mémoire (6) d'au moins un calculateur avionique (3) à bord de l'aéronef (AC) des données de plan de vol secondaire à l'aide d'un dispositif de saisie (4), les données de plan de vol secondaire comprenant au moins un identifiant d'au moins un point de cheminement et au moins une contrainte d'altitude du ou des points de cheminement, le ou les calculateurs avioniques (3) étant configurés pour déterminer des données de plan de vol secondaire à partir des données de plan de vol secondaire entrées par le pilote aux commandes et à partir de performances de l'aéronef (AC), les données de plan de vol secondaire déterminées comprenant au moins une position du ou des points de cheminement et au moins une trajectoire de secours,
- un deuxième module (22) configuré pour surveiller une pression dans une cabine de l'aéronef (AC) à partir de mesures de pression transmises par des capteurs de pression (S1) dans la cabine et
- un troisième module (23) configuré pour surveiller un fonctionnement d'au moins un moteur (M) de l'aéronef (AC) à partir de données transmises par des capteurs de fonctionnement (S2) de moteur (M) ;
- un quatrième module (24) configuré pour déterminer une capacité du pilote aux commandes ;
- un cinquième module (25) configuré pour activer automatiquement une trajectoire de secours correspondant à la trajectoire de secours définie entre les positions de deux points de cheminement consécutifs entre lesquels se trouve l'aéronef (AC), la trajectoire de secours étant activée :
o si l'aéronef (AC) se présente dans un contexte difficile,
o si, d'une part, une dépressurisation de la cabine est détectée par le deuxième module (22) ou si une panne d'au moins un moteur (M) est détectée par le troisième module (23) et
o si, d'autre part, une incapacité du pilote aux commandes est détectée par le quatrième module (24) ;
le dispositif étant **caractérisé en ce que**, pour activer automatiquement une trajectoire de secours, le cinquième module (25) étant configuré pour inhiber un système de protection en altitude pour atteindre l'altitude de survie dans un temps correspondant à un temps d'autonomie à l'oxygène de l'aéronef (AC) si une dépressurisation de la cabine est détectée ou pour atteindre une altitude d'équilibre si une panne d'au moins un moteur (M) est détectée.

8. Dispositif selon la revendication 7,
**caractérisé en ce que**, pour avertir le pilote aux commandes, le premier module (21) est en outre configuré pour :
- déterminer une trajectoire verticale à partir du ou des identifiants du ou des points de cheminement, de la ou des positions du ou des points de cheminement, de la ou des altitudes du ou des points de cheminement et de la ou des trajectoires de secours,
- transmettre à une base de données d'altitudes (5) la trajectoire verticale afin que la base de données d'altitudes (5) détermine une courbe de relief de terrain correspondant aux données d'altitude à la verticale de la trajectoire verticale,
- signaler au pilote aux commandes que des données erronées ont été entrée dans la première mémoire (6) du ou des calculateurs avioniques (3) après que la base de données d'altitudes (5) a comparé la trajectoire verticale et la courbe de relief de terrain et a généré un signal représentatif d'une alerte si la trajectoire verticale est susceptible de croiser la courbe de relief de terrain.

9. Dispositif selon la revendication 7,
**caractérisé en ce que**, pour avertir le pilote aux commandes, le premier module (21) est configuré pour :
- comparer, d'une part, le ou les identifiants du ou des points de cheminement du plan de vol secondaire et un ou des identifiants d'au moins un point de cheminement préalablement stockés dans une deuxième mémoire (7) du ou des calculateurs avioniques (3) et, d'autre part, la ou les contraintes d'altitude du ou des points de cheminement du plan de vol secondaire et une ou des contraintes d'altitude d'au moins un point de cheminement préalablement stockées dans la deuxième mémoire (7) du ou des calculateurs avioniques (3),
- comparer un ordre de points de cheminement préalablement stockés dans la deuxième mémoire (7) du ou des calculateurs avioniques (3) et un ordre de points de cheminement du plan de vol secondaire,
- pour signaler au pilote aux commandes qu'au moins un identifiant d'un point de cheminement du plan de vol secondaire ne correspond pas à au moins un identifiant d'au moins un point de cheminement préalablement stocké ou qu'au moins une contrainte d'altitude d'un point de cheminement du plan de vol secondaire ne correspond pas à au moins une contrainte d'altitude d'au moins un point de cheminement préalablement stocké dans la deuxième mémoire (7) du ou des calculateurs avioniques (3),
- signaler au pilote aux commandes que l'ordre des points de cheminement du plan de vol secondaire ne correspond pas à l'ordre de points de cheminement préalablement stockés dans la deuxième mémoire (7) du ou des calculateurs avioniques (3).

10. Dispositif selon l'une des revendications 7 à 9,
**caractérisé en ce que** la trajectoire de secours correspond à une trajectoire de secours vers un aéroport de déroutement, ladite trajectoire de secours correspondant à une trajectoire de secours vers un aéroport de déroutement en fonction de la position courante l'aéronef (AC).

11. Dispositif selon l'une des revendications 7 à 9,
**caractérisé en ce que** la trajectoire de secours correspond à une trajectoire d'évacuation de survie vers une altitude de survie.

12. Aéronef,
**caractérisé en ce qu'**il comporte un dispositif de gestion de vol, tel que celui spécifié sous l'une quelconque des revendications 7 à 11.

## Patentansprüche

1. Verfahren zum Flugmanagement unter schwierigen Bedingungen, wobei das Verfahren für ein Luftfahrzeug (AC) vorgesehen ist, das gemäß einem Hauptflugplan fliegt, wobei das Verfahren die folgenden Schritte umfasst:
- einen Schritt (E1) der Inbetriebnahme, um die Gesamtheit der folgenden Schritte zu implementieren, wenn sich das Luftfahrzeug (AC) in einem Fall schwieriger Bedingungen befindet,
- einen Schritt (E2) der Vorbereitung, wobei:
- Sekundärflugplandaten durch einen verantwortlichen Piloten des Luftfahrzeugs (AC) in einen ersten Speicher (6) von mindestens einem bordseitigen Avionikrechner (3) an Bord des Luftfahrzeugs (AC) unter Verwendung einer Eingabevorrichtung (4) eingegeben werden, wobei die durch den verantwortlichen Piloten eingegebenen Sekundärflugplandaten mindestens eine Kennung von mindestens einem Wegpunkt und mindestens eine Höhenbeschränkung des einen oder der mehreren Wegpunkte umfassen, und
- Sekundärflugplandaten durch den einen oder die mehreren Avionikrechner (3) aus den durch den verantwortlichen Piloten eingegebenen Sekundärflugplandaten und aus Leistungsdaten des Luftfahrzeugs (AC) bestimmt werden, wobei die bestimmten Sekundärflugplandaten mindestens eine Position des einen oder der mehreren Wegpunkte und mindestens eine Notflugbahn umfassen,
- einen Schritt (E3) der Warnung, implementiert durch ein erstes Modul (21), um zu erfassen und den verantwortlichen Piloten zu warnen, dass fehlerhafte Daten in den Sekundärflugplan während des Schrittes (E2) der Vorbereitung eingegeben wurden,
- einen Schritt (E4) der Überwachung:
- implementiert durch ein zweites Modul (22), um einen Druck in einer Kabine des Luftfahrzeugs (AC) auf der Grundlage von durch Drucksensoren (S1) in der Kabine übermittelten Druckmessungen zu überwachen, und
- implementiert durch ein drittes Modul (23), um einen Betrieb von mindestens einem Triebwerk (M) des Luftfahrzeugs (AC) auf der Grundlage von durch Betriebssensoren (S2) des Triebwerks (M) übermittelten Daten zu überwachen;
- einen Schritt (E5) der Bestimmung, implementiert durch ein viertes Modul (24), um eine Fähigkeit des verantwortlichen Piloten zu bestimmen;
- einen Schritt (E6) der Aktivierung, implementiert durch ein fünftes Modul (25), um automatisch eine Notflugbahn zu aktivieren, die der Notflugbahn entspricht, die zwischen Positionen von zwei aufeinanderfolgenden Wegpunkten, zwischen denen sich das Luftfahrzeug (AC) befindet, definiert ist, wobei der Schritt (E6) der Aktivierung implementiert wird:
- wenn das Luftfahrzeug (AC) in schwierige Bedingungen gerät,
- wenn, einerseits, eine Dekompression der Kabine im Schritt (E4) der Überwachung erfasst wird oder wenn ein Ausfall von mindestens einem Triebwerk (M) im Schritt (E4) der Überwachung erfasst wird, und
- wenn, andererseits, eine Unfähigkeit des verantwortlichen Piloten im Schritt (E5) der Bestimmung erfasst wird;
wobei das Verfahren **dadurch gekennzeichnet ist, dass** der Schritt (E6) der Aktivierung einen Unterschritt (E60) der Inhibierung umfasst, um ein Höhenschutzsystem zu inhibieren, um die Überlebenshöhe in einer Zeit zu erreichen, die einer Sauerstoffautonomiezeit des Luftfahrzeugs (AC) entspricht, wenn eine Dekompression der Kabine erfasst wird, oder um eine Gleichgewichtsflughöhe zu erreichen, wenn ein Ausfall von mindestens einem Triebwerk (M) erfasst wird.

2. Verfahren nach Anspruch 1,
**dadurch gekennzeichnet, dass** es implementiert wird, wenn das Luftfahrzeug (AC) in eine Flugphase gerät, in der ein einzelner verantwortlicher Pilot das Luftfahrzeug (AC) führt.

3. Verfahren nach einem der Ansprüche 1 und 2,
**dadurch gekennzeichnet, dass** der Schritt (E3) der Warnung die folgenden Unterschritte umfasst:
- einen ersten Unterschritt (E30a) der Bestimmung, um eine Vertikaltrajektorie aus der einen oder den mehreren Kennungen des einen oder der mehreren Wegpunkte, der einen oder den mehreren Positionen des einen oder der mehreren Wegpunkte, der einen oder den mehreren Höhen des einen oder der mehreren Wegpunkte und der einen oder den mehreren Notflugbahnen zu bestimmen,
- einen ersten Unterschritt (E31a) der Übertragung, um an eine Höhendatenbank (5) die im ersten Unterschritt (E30a) der Bestimmung bestimmte Vertikaltrajektorie zu übertragen,
- einen zweiten Unterschritt (E32a) der Bestimmung, implementiert durch die Höhendatenbank (5), um eine Geländereliefkurve zu bestimmen, die den Höhendaten senkrecht zur Vertikaltrajektorie entspricht,
- einen Unterschritt (E33a) des Vergleichs, implementiert durch die Höhendatenbank (5), um die Vertikaltrajektorie und die Geländereliefkurve zu vergleichen,
- einen zweiten Unterschritt (E34a) der Übertragung, implementiert durch die Höhendatenbank (5), um mindestens ein Signal zu erzeugen, das für eine Warnung repräsentativ ist, wenn die Vertikaltrajektorie dazu neigt, die Geländereliefkurve zu schneiden,
- einen Unterschritt (E35a) der Warnung, um dem verantwortlichen Piloten zu signalisieren, dass fehlerhafte Daten in den einen oder die mehreren Avionikrechner (3) eingegeben wurden.

4. Verfahren nach einem der Ansprüche 1 und 2,
**dadurch gekennzeichnet, dass** der Schritt (E3) der Warnung die folgenden Unterschritte umfasst:
- einen ersten Unterschritt (E30b) des Vergleichs, um einerseits die eine oder die mehreren Kennungen des einen oder der mehreren Wegpunkte des Sekundärflugplans und eine oder mehrere Kennungen von mindestens einem Wegpunkt, die vorab in einem zweiten Speicher (7) des einen oder der mehreren Avionikrechner (3) gespeichert sind, und andererseits die eine oder die mehreren Höhenbeschränkungen des einen oder der mehreren Wegpunkte des Sekundärflugplans und eine oder mehrere Höhenbeschränkungen von mindestens einem Wegpunkt, die vorab in dem zweiten Speicher (7) des einen oder der mehreren Avionikrechner (3) gespeichert sind, zu vergleichen, und
- einen zweiten Unterschritt (E30c) des Vergleichs, um eine Reihenfolge von Wegpunkten, die vorab in dem zweiten Speicher (7) des einen oder der mehreren Avionikrechner (3) gespeichert sind, und eine Reihenfolge von Wegpunkten des Sekundärflugplans zu vergleichen,
- einen ersten Unterschritt (E31b) der Warnung, um dem verantwortlichen Piloten zu signalisieren, dass mindestens eine Kennung eines Wegpunkts des Sekundärflugplans nicht mit mindestens einer Kennung von mindestens einem Wegpunkt übereinstimmt, die vorab in dem zweiten Speicher (7) des einen oder der mehreren Avionikrechner (3) gespeichert ist, oder dass mindestens eine Höhenbeschränkung eines Wegpunkts des Sekundärflugplans nicht mit mindestens einer Höhenbeschränkung von mindestens einem Wegpunkt übereinstimmt, die vorab in dem zweiten Speicher (7) des einen oder der mehreren Avionikrechner (3) gespeichert ist, und
- einen zweiten Unterschritt (E31c) der Warnung, um dem verantwortlichen Piloten zu signalisieren, dass die Reihenfolge der Wegpunkte des Sekundärflugplans nicht mit der Reihenfolge von Wegpunkten übereinstimmt, die vorab in dem zweiten Speicher (7) des einen oder der mehreren Avionikrechner (3) gespeichert sind.

5. Verfahren nach einem der Ansprüche 1 bis 4,
**dadurch gekennzeichnet, dass** die Notflugbahn einer Notflugbahn zu einem Ausweichflughafen entspricht, wobei die besagte Notflugbahn in Abhängigkeit von der aktuellen Position des Luftfahrzeugs (AC) einer Notflugbahn zu einem Ausweichflughafen entspricht.

6. Verfahren nach einem der Ansprüche 1 bis 4,
**dadurch gekennzeichnet, dass** die Notflugbahn einer Evakuationsflugbahn zur Erreichung der Überlebenshöhe entspricht.

7. Vorrichtung zum Flugmanagement unter schwierigen Bedingungen, wobei die Vorrichtung an Bord eines Luftfahrzeugs (AC), das gemäß einem Hauptflugplan fliegt, mitgeführt ist, wobei die Vorrichtung umfasst:
- ein erstes Modul (21), konfiguriert, um zu erfassen und den verantwortlichen Piloten zu warnen, dass fehlerhafte Daten in einen Sekundärflugplan eingegeben wurden, wenn ein verantwortlicher Pilot des Luftfahrzeugs (AC) in einen ersten Speicher (6) von mindestens einem bordseitigen Avionikrechner (3) an Bord des Luftfahrzeugs (AC) Sekundärflugplandaten unter Verwendung einer Eingabevorrichtung (4) eingegeben hat, wobei die Sekundärflugplandaten mindestens eine Kennung von mindestens einem Wegpunkt und mindestens eine Höhenbeschränkung des einen oder der mehreren Wegpunkte umfassen, wobei der eine oder die mehreren Avionikrechner (3) konfiguriert sind, um Sekundärflugplandaten aus den durch den verantwortlichen Piloten eingegebenen Sekundärflugplandaten und aus Leistungsdaten des Luftfahrzeugs (AC) zu bestimmen, wobei die bestimmten Sekundärflugplandaten mindestens eine Position des einen oder der mehreren Wegpunkte und mindestens eine Notflugbahn umfassen,
- ein zweites Modul (22), konfiguriert, um einen Druck in einer Kabine des Luftfahrzeugs (AC) auf der Grundlage von durch Drucksensoren (S1) in der Kabine übermittelten Druckmessungen zu überwachen, und
- ein drittes Modul (23), konfiguriert, um einen Betrieb von mindestens einem Triebwerk (M) des Luftfahrzeugs (AC) auf der Grundlage von durch Betriebssensoren (S2) des Triebwerks (M) übermittelten Daten zu überwachen;
- ein viertes Modul (24), konfiguriert, um eine Fähigkeit des verantwortlichen Piloten zu bestimmen;
- ein fünftes Modul (25), konfiguriert, um automatisch eine Notflugbahn zu aktivieren, die der Notflugbahn entspricht, die zwischen den Positionen von zwei aufeinanderfolgenden Wegpunkten, zwischen denen sich das Luftfahrzeug (AC) befindet, definiert ist, wobei die Notflugbahn aktiviert wird:
- wenn das Luftfahrzeug (AC) in schwierige Bedingungen gerät,
- wenn, einerseits, eine Dekompression der Kabine durch das zweite Modul (22) erfasst wird oder wenn ein Ausfall von mindestens einem Triebwerk (M) durch das dritte Modul (23) erfasst wird, und
- wenn, andererseits, eine Unfähigkeit des verantwortlichen Piloten durch das vierte Modul (24) erfasst wird;
wobei die Vorrichtung **dadurch gekennzeichnet ist, dass** zum automatischen Aktivieren einer Notflugbahn das fünfte Modul (25) konfiguriert ist, um ein Höhenschutzsystem zu inhibieren, um die Überlebenshöhe in einer Zeit zu erreichen, die einer Sauerstoffautonomiezeit des Luftfahrzeugs (AC) entspricht, wenn eine Dekompression der Kabine erfasst wird, oder um eine Gleichgewichtsflughöhe zu erreichen, wenn ein Ausfall von mindestens einem Triebwerk (M) erfasst wird.

8. Vorrichtung nach Anspruch 7,
**dadurch gekennzeichnet, dass**, um den verantwortlichen Piloten zu warnen, das erste Modul (21) ferner konfiguriert ist, um:
- eine Vertikaltrajektorie aus der einen oder den mehreren Kennungen des einen oder der mehreren Wegpunkte, der einen oder den mehreren Positionen des einen oder der mehreren Wegpunkte, der einen oder den mehreren Höhen des einen oder der mehreren Wegpunkte und der einen oder den mehreren Notflugbahnen zu bestimmen,
- die Vertikaltrajektorie an eine Höhendatenbank (5) zu übertragen, damit die Höhendatenbank (5) eine Geländereliefkurve bestimmt, die den Höhendaten senkrecht zur Vertikaltrajektorie entspricht,
- dem verantwortlichen Piloten zu signalisieren, dass fehlerhafte Daten in den ersten Speicher (6) des einen oder der mehreren Avionikrechner (3) eingegeben wurden, nachdem die Höhendatenbank (5) die Vertikaltrajektorie und die Geländereliefkurve verglichen und ein Signal erzeugt hat, das für eine Warnung repräsentativ ist, wenn die Vertikaltrajektorie dazu neigt, die Geländereliefkurve zu schneiden.

9. Vorrichtung nach Anspruch 7,
**dadurch gekennzeichnet, dass**, um den verantwortlichen Piloten zu warnen, das erste Modul (21) konfiguriert ist, um:
- einerseits die eine oder die mehreren Kennungen des einen oder der mehreren Wegpunkte des Sekundärflugplans und eine oder mehrere Kennungen von mindestens einem Wegpunkt, die vorab in einem zweiten Speicher (7) des einen oder der mehreren Avionikrechner (3) gespeichert sind, und andererseits die eine oder die mehreren Höhenbeschränkungen des einen oder der mehreren Wegpunkte des Sekundärflugplans und eine oder mehrere Höhenbeschränkungen von mindestens einem Wegpunkt, die vorab in dem zweiten Speicher (7) des einen oder der mehreren Avionikrechner (3) gespeichert sind, zu vergleichen,
- eine Reihenfolge von Wegpunkten, die vorab in dem zweiten Speicher (7) des einen oder der mehreren Avionikrechner (3) gespeichert sind, und eine Reihenfolge von Wegpunkten des Sekundärflugplans zu vergleichen,
- dem verantwortlichen Piloten zu signalisieren, dass mindestens eine Kennung eines Wegpunkts des Sekundärflugplans nicht mit mindestens einer Kennung von mindestens einem Wegpunkt, die vorab gespeichert ist, übereinstimmt oder dass mindestens eine Höhenbeschränkung eines Wegpunkts des Sekundärflugplans nicht mit mindestens einer Höhenbeschränkung von mindestens einem Wegpunkt, die vorab in dem zweiten Speicher (7) des einen oder der mehreren Avionikrechner (3) gespeichert ist, übereinstimmt,
- dem verantwortlichen Piloten zu signalisieren, dass die Reihenfolge der Wegpunkte des Sekundärflugplans nicht mit der Reihenfolge von Wegpunkten übereinstimmt, die vorab in dem zweiten Speicher (7) des einen oder der mehreren Avionikrechner (3) gespeichert sind.

10. Vorrichtung nach einem der Ansprüche 7 bis 9,
**dadurch gekennzeichnet, dass** die Notflugbahn einer Notflugbahn zu einem Ausweichflughafen entspricht, wobei die besagte Notflugbahn in Abhängigkeit von der aktuellen Position des Luftfahrzeugs (AC) einer Notflugbahn zu einem Ausweichflughafen entspricht.

11. Vorrichtung nach einem der Ansprüche 7 bis 9, **dadurch gekennzeichnet, dass** die Notflugbahn einer Evakuationsflugbahn zur Erreichung der Überlebenshöhe entspricht.

12. Luftfahrzeug,
**dadurch gekennzeichnet, dass** es eine Vorrichtung zum Flugmanagement umfasst, wie sie in einem der Ansprüche 7 bis 11 spezifiziert ist.

## Claims

1. A method for managing flight in the event of a challenging context, the method being intended to be implemented for an aircraft (AC) flying in accordance with a main flight plan,
the method comprising the following steps:
- a start-up step (E1) for implementing all the subsequent steps when the aircraft (AC) is in a challenging context;
- a preparation step (E2), in which:
o secondary flight plan data is entered by a pilot flying at the controls of the aircraft (AC) into a first memory (6) of at least one avionics computer (3) on board the aircraft (AC) using an input device (4), the secondary flight plan data entered by the pilot flying comprising at least one identifier of at least one waypoint and at least one altitude constraint of the one or more waypoints; and
o secondary flight plan data is determined by the one or more avionics computers (3) based on the secondary flight plan data entered by the pilot flying and on the performance capabilities of the aircraft (AC), with the determined secondary flight plan data comprising at least one position of the one or more waypoints and at least one emergency trajectory;
- a warning step (E3) implemented by a first module (21) for detecting and warning the pilot flying that erroneous data has been entered into the secondary flight plan during the preparation step (E2);
- a monitoring step (E4):
o implemented by a second module (22) for monitoring a pressure in a cabin of the aircraft (AC) based on pressure measurements transmitted by pressure sensors (S1) in the cabin; and
∘ implemented by a third module (23) for monitoring the operation of at least one engine (M) of the aircraft (AC) based on data transmitted by engine (M) operation sensors (S2);
- a determination step (E5) implemented by a fourth module (24) for determining the capability of the pilot flying;
- an activation step (E6) implemented by a fifth module (25) for automatically activating an emergency trajectory corresponding to the emergency trajectory defined between positions of two consecutive waypoints between which the aircraft (AC) is located, the activation step (E6) being implemented:
o if the aircraft (AC) encounters a challenging context;
o if, on the one hand, cabin depressurization is detected in the monitoring step (E4) or if a failure of at least one engine (M) is detected in the monitoring step (E4); and
o if, on the other hand, incapacitation of the pilot flying is detected in the determination step (E5);
the method being **characterized in that** the activation step (E6) comprises an inhibition sub-step (E60) for inhibiting an altitude protection system in order to reach the survival altitude within a time corresponding to an oxygen endurance time of the aircraft (AC) if cabin depressurization is detected or in order to reach an equilibrium altitude if a failure of at least one engine (M) is detected.

2. The method as claimed in claim 1,
**characterized in that** it is implemented when the aircraft (AC) is in a flight phase in which a single pilot flying is at the controls of the aircraft (AC).

3. The method as claimed in any of claims 1 and 2,
**characterized in that** the warning step (E3) comprises the following sub-steps:
- a first determination sub-step (E30a) for determining a vertical trajectory based on the one or more identifiers of the one or more waypoints, the one or more positions of the one or more waypoints, the one or more altitudes of the one or more waypoints and the one or more emergency trajectories;
- a first transmission sub-step (E31a) for transmitting the vertical trajectory determined in the first determination sub-step (E30a) to an altitude database (5);
- a second determination sub-step (E32a) implemented by the altitude database (5) for determining a terrain relief curve corresponding to the vertical altitude data of the vertical trajectory;
- a comparison sub-step (E33a) implemented by the altitude database (5) for comparing the vertical trajectory and the terrain relief curve;
- a second transmission sub-step (E34a) implemented by the altitude database (5) for generating at least one signal representing a warning if the vertical trajectory is likely to cross the terrain relief curve;
- a warning sub-step (E35a) for notifying the pilot flying that erroneous data has been entered into the one or more avionics computers (3).

4. The method as claimed in any of claims 1 and 2,
**characterized in that** the warning step (E3) comprises the following sub-steps:
- a first comparison sub-step (E30b) for comparing, on the one hand, the one or more identifiers of the one or more waypoints of the secondary flight plan and one or more identifiers of at least one waypoint previously stored in a second memory (7) of the one or more avionics computers (3) and, on the other hand, the one or more altitude constraints of the one or more waypoints of the secondary flight plan and one or more altitude constraints of at least one waypoint previously stored in the second memory (7) of the one or more avionics computers (3); and
- a second comparison sub-step (E30c) for comparing an order of waypoints previously stored in the second memory (7) of the one or more avionics computers (3) and an order of waypoints of the secondary flight plan;
- a first warning sub-step (E31b) for notifying the pilot flying that at least one identifier of a waypoint of the secondary flight plan does not correspond to at least one identifier of at least one waypoint previously stored in the second memory (7) of the one or more avionics computers (3) or that at least one altitude constraint of a waypoint of the secondary flight plan does not correspond to at least one altitude constraint of at least one waypoint previously stored in the second memory (7) of the one or more avionics computers (3); and
- a second warning sub-step (E31c) for notifying the pilot flying that the order of the waypoints of the secondary flight plan does not correspond to the order of the waypoints previously stored in the second memory (7) of the one or more avionics computers (3).

5. The method as claimed in any of claims 1 to 4,
**characterized in that** the emergency trajectory corresponds to an emergency trajectory toward a diversion airport, said emergency trajectory corresponding to an emergency trajectory toward a diversion airport as a function of the current position of the aircraft (AC).

6. The method as claimed in any of claims 1 to 4,
**characterized in that** the emergency trajectory corresponds to a survival evacuation trajectory toward a survival altitude.

7. A device for managing flight in the event of a challenging context, the device being installed on board an aircraft (AC) flying in accordance with a main flight plan,
the device comprising:
- a first module (21) configured for detecting and warning the pilot flying that erroneous data has been entered into a secondary flight plan when a pilot flying at the controls of the aircraft (AC) has entered secondary flight plan data into a first memory (6) of at least one avionics computer (3) on board the aircraft (AC) using an input device (4), the secondary flight plan data comprising at least one identifier of at least one waypoint and at least one altitude constraint of the one or more waypoints, the one or more avionics computers (3) being configured for determining secondary flight plan data based on secondary flight plan data entered by the pilot flying and based on performance capabilities of the aircraft (AC), the determined secondary flight plan data comprising at least one position of the one or more waypoints and at least one emergency trajectory;
- a second module (22) configured for monitoring a pressure in a cabin of the aircraft (AC) based on pressure measurements transmitted by pressure sensors (S1) in the cabin; and
- a third module (23) configured for monitoring the operation of at least one engine (M) of the aircraft (AC) based on data transmitted by engine (M) operation sensors (S2);
- a fourth module (24) configured for determining the capability of the pilot flying;
- a fifth module (25) configured for automatically activating an emergency trajectory corresponding to the emergency trajectory defined between the positions of two consecutive waypoints between which the aircraft (AC) is located, the emergency trajectory being activated:
o if the aircraft (AC) encounters a challenging context;
o if, on the one hand, cabin depressurization is detected by the second module (22) or if a failure of at least one engine (M) is detected by the third module (23); and
o if, on the other hand, incapacitation of the pilot flying is detected by the fourth module (24);
the device being **characterized in that**, in order to automatically activate an emergency trajectory, the fifth module (25) is configured for inhibiting an altitude protection system in order to reach the survival altitude within a time corresponding to an oxygen endurance time of the aircraft (AC) if cabin depressurization is detected or in order to reach an equilibrium altitude if a failure of at least one engine (M) is detected.

8. The device as claimed in claim 7,
**characterized in that**, in order to warn the pilot flying, the first module (21) is further configured for:
- determining a vertical trajectory based on the one or more identifiers of the one or more waypoints, the one or more positions of the one or more waypoints, the one or more altitudes of the one or more waypoints and the one or more emergency trajectories;
- transmitting the vertical trajectory to an altitude database (5) so that the altitude database (5) determines a terrain relief curve corresponding to the vertical altitude data of the vertical trajectory;
- notifying the pilot flying that erroneous data has been entered into the first memory (6) of the one or more avionics computers (3) after the altitude database (5) has compared the vertical trajectory and the terrain relief curve and has generated a signal representing a warning if the vertical trajectory is likely to cross the terrain relief curve.

9. The device as claimed in claim 7,
**characterized in that**, in order to warn the pilot flying, the first module (21) is configured for:
- comparing, on the one hand, the one or more identifiers of the one or more waypoints of the secondary flight plan and one or more identifiers of at least one waypoint previously stored in a second memory (7) of the one or more avionics computers (3) and, on the other hand, the one or more altitude constraints of the one or more waypoints of the secondary flight plan and one or more altitude constraints of at least one waypoint previously stored in the second memory (7) of the one or more avionics computers (3);
- comparing an order of waypoints previously stored in the second memory (7) of the one or more avionics computers (3) and an order of waypoints of the secondary flight plan;
- notifying the pilot flying that at least one identifier of a waypoint of the secondary flight plan does not correspond to at least one identifier of at least one previously stored waypoint or that at least one altitude constraint of a waypoint of the secondary flight plan does not correspond to at least one altitude constraint of at least one waypoint previously stored in the second memory (7) of the one or more avionics computers (3);
- notifying the pilot flying that the order of the waypoints of the secondary flight plan does not correspond to the order of the waypoints previously stored in the second memory (7) of the one or more avionics computers (3).

10. The device as claimed in any of claims 7 to 9,
**characterized in that** the emergency trajectory corresponds to an emergency trajectory toward a diversion airport, said emergency trajectory corresponding to an emergency trajectory toward a diversion airport as a function of the current position of the aircraft (AC).

11. The device as claimed in any of claims 7 to 9,
**characterized in that** the emergency trajectory corresponds to a survival evacuation trajectory toward a survival altitude.

12. An aircraft,
**characterized in that** it comprises a flight management device such as that specified in any one of claims 7 to 11.
